# EUROPEAN PATENT SPECIFICATION

(11) **EP 1 817 508 B1**
(45) Date of publication and mention of the grant of the patent: **24.02.2010**
(21) Application number: 05825824.5
(22) Date of filing: 28.11.2005
(51) Int. Cl.: F16F 13/14, B62D 33/06

(54) **VEHICLE CAB SUSPENSION DAMPING BUSHING AND METHOD OF MAKING**
DÄMPFUNGSBUCHSE FÜR EINE FÜHRERHAUSAUFHÄNGUNG UND HERSTELLUNGSVERFAHREN DAFÜR
COUSSINET AMORTISSEUR DE SUSPENSION DE CABINE DE CONDUCTEUR DE VEHICULE ET SON PROCEDE DE FABRICATION

(30) Priority: 29.11.2004 US 631319 P; 30.12.2004 US 640404 P
(43) Date of publication of application: 15.08.2007
(73) Proprietor: LORD CORPORATION, Cary, NC 27511 (US)
(72) Inventor: BARICKMAN, James, R., Erie, PA 16506-1702 (US); KUESTER, Ulrich, A., Spring Lake, MI 49456-2312 (US); FRERI, Nicola, I-25080 Mazzano, Brescia (IT)
(74) Representative: Dunlop, Brian Kenneth Charles
(86) International application number: PCT/US2005/043050
(87) International publication number: WO 2006/058317

(56) References cited:
- EP-B1- 0 009 120
- DE-A1- 4 106 214
- US-A- 4 786 036
- US-A- 4 817 926
- US-A- 5 299 788
- PATENT ABSTRACTS OF JAPAN vol. 016, no. 103 (M-1221), 13 March 1992 (1992-03-13) & JP 03 277845 A (KINUGAWA RUBBER IND CO LTD), 9 December 1991 (1991-12-09)
- PATENT ABSTRACTS OF JAPAN vol. 014, no. 052 (M-0928), 30 January 1990 (1990-01-30) & JP 01 279129 A (KURASHIKI KAKO KK), 9 November 1989 (1989-11-09)
- PATENT ABSTRACTS OF JAPAN vol. 1995, no. 01, 28 February 1995 (1995-02-28) & JP 06 294440 A (BRIDGESTONE CORP), 21 October 1994 (1994-10-21)
- PATENT ABSTRACTS OF JAPAN vol. 013, no. 148 (M-812), 11 April 1989 (1989-04-11) & JP 63 308243 A (MARUGO RUBBER KOGYO KK), 15 December 1988 (1988-12-15)
- PATENT ABSTRACTS OF JAPAN vol. 012, no. 083 (M-677), 16 March 1988 (1988-03-16) & JP 62 224745 A (KINUGAWA RUBBER IND CO LTD), 2 October 1987 (1987-10-02)

## Description

This application claims priority from United States Provisional Patent Application Number 60/640,404 filed on December 30, 2004, and United States Provisional Patent Application Number 60/631,319 filed on November 29, 2004.

### FIELD OF THE INVENTION

The present invention relates to bushings and methods of making bushings. More particularly the invention relates to a vehicle cab suspension bushing, and particularly a bushing for damping motion.

### BACKGROUND OF THE INVENTION

There is a need for a vehicle cab suspension bushing for damping vehicle cab suspension motion. There is a need for an economically feasible method of damping vehicle cab suspension motion. There is a need for a robust bushing that provides beneficial damping of motion In a cab suspension system of an agricultural vehicle. There is a need for an economically feasible method of making a vehicle cab suspension bushing that provides beneficial damping of suspension motion.

JP-A-3277845 and JP-A-1279129 each describe a liquid sealed bushing in which an inner tubular member is supported concentrically in an outer tubular member

EP-B-0009120 discloses a preferred use of a bushing on the axle of a tiltable vehicle cab. The inner tubular member can be arranged eccentrically to the outer tubular member.

### SUMMARY OF THE INVENTION

The invention includes a vesicle cab suspension radial damped bushing including a nonelastomeric rigid outer member having an outer member center bore with an outer member center axis. The vehicle cab suspension radial damped bushing includes a nonelastomeric rigid inner plunger member having an Inner member center bore with an inner member center axis with the inner member center axis offset from the outer member center axis. The inner plunger member includes a plurality of radial paddles extending radially outward towards the outer member. The radial damped bushing includes a first intermediate sidewall elastomer and a second intermediate sidewall elastomer with the first intermediate sidewall elastomer and the second intermediate sidewall elastomer disposed between the inner member and the outer member and forming a toroidal cavity for constraining a viscous fluid around the radial paddles wherein a supported load applied to the inner member centers the inner member center axis with the outer member center axis and a supported load motion of the inner member relative to the outer member preferably moves, aggravates, agitates, and stirs said viscous fluid in the toroidal cavity with the radial paddles.

The invention includes a method of making a vehicle suspension damping bushing for damping motion. Preferably the method includes making a vehicle suspension damping bushing for damping motion about a vehicle suspension axis and supporting a vehicle cab load. The method includes providing a nonelastomeric rigid outer ductile tubular member having an outer member center bore with an outer member center axis. The method includes providing a nonelastomeric rigid inner plunger member having an inner member center bore with an inner member center axis, the inner member including a plurality of radial paddles extending radially outward. The method includes providing a first intermediate sidewall elastomer and a second intermediate sidewall elastomer. The method includes providing a viscous fluid. The method includes disposing the first intermediate sidewall elastomer and the second intermediate sidewall elastomer between the inner member and the outer member to form a cavity for constraining the viscous fluid around the inner member radial paddles with the inner member radial paddles extending radially outward towards the outer member with said inner member center axis offset from said outer member axis wherein a supported load applied to the inner member substantially centers the inner member center axis with the outer member center axis and a supported load motion of the inner member relative to the outer member preferably moves, aggravates, agitates, and stirs the viscous fluid in the cavity with the radial paddles.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principals and operation of the invention.

### Brief Description of the Drawings

FIG. 1 shows an embodiment of the invention.
FIG. 2 shows an embodiment of the invention.
FIG. 3 shows an embodiment of the invention.
FIG. 4 shows an embodiment of the invention.
FIG. 5 shows an embodiment of the invention.
FIG. 6 shows an embodiment of the invention.
FIG. 7 shows an embodiment of the invention.
FIG. 8 shows an embodiment of the invention.
FIG. 9 shows an embodiment of the invention.
FIG. 10 shows an embodiment of the invention.
FIG. 11 is a load deflection plot for a bushing.

### Detailed Description

Reference will now be made in detail to the present preferred embodiments of the invention, examples of which are illustrated in the accompanying drawings.

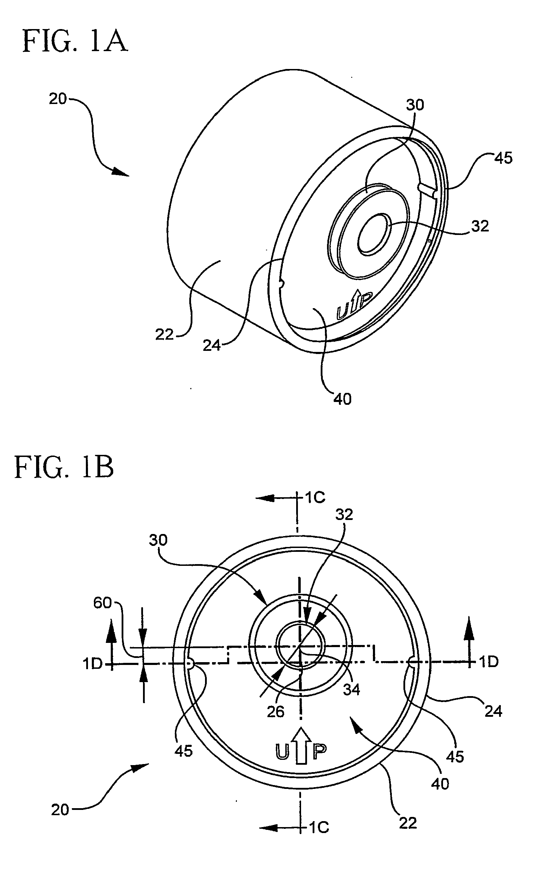

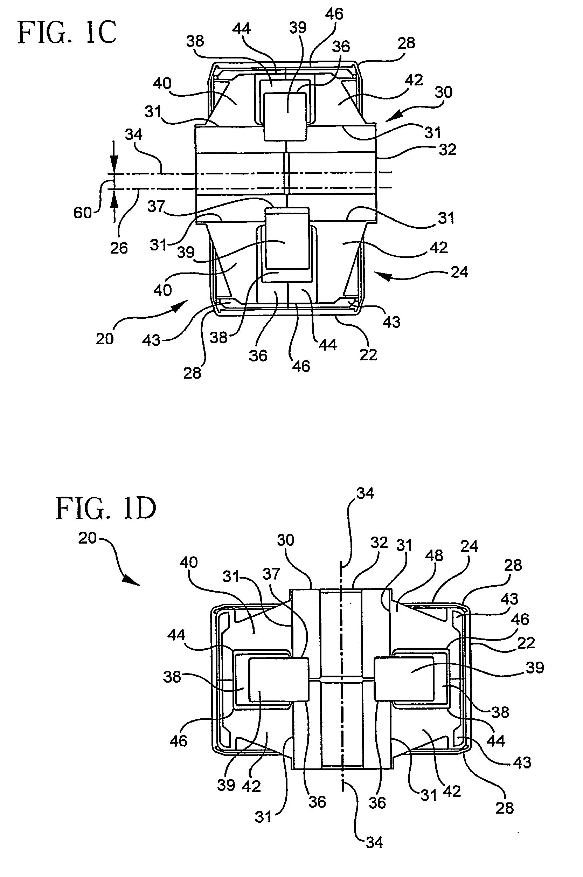

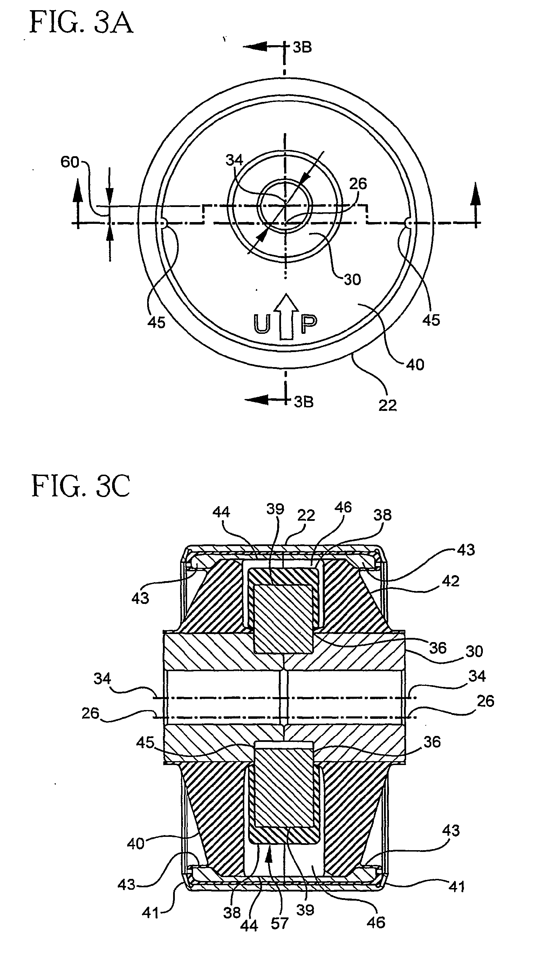

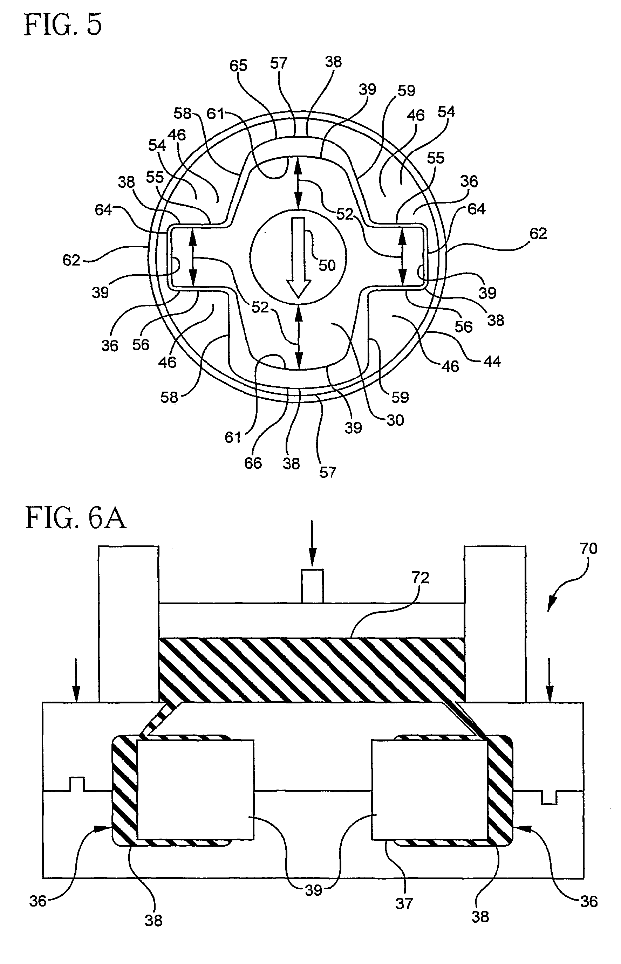

The invention includes a vehicle cab suspension radial damped bushing. FIG. 1 shows a vehicle cab suspension radial damped bushing 20 including a nonelastomeric rigid outer member 22 having an outer member center bore 24 with an outer member center axis 26. The vehicle cab suspension radial damped bushing 20 includes a nonelastomeric rigid inner plunger member 30 having an inner member center bore 32 with an inner member center axis 34 with the inner member center axis 34 offset from the outer member center axis 26. The inner plunger member 30 includes a plurality of radial paddles 36 extending radially outward towards the outer member 22. The radial damped bushing 20 includes a first intermediate sidewall elastomer 40 and a second intermediate sidewall elastomer 42 with the first intermediate sidewall elastomer and the second intermediate sidewall elastomer disposed between the inner member 30 and the outer member 22 and forming a toroidal cavity 44 for constraining a viscous fluid 46 around the radial paddles 36 wherein a supported load 50 applied to the inner member 30 centers the inner member center axis 34 with the outer member center axis 26 and a motion 52 of the inner member 30 relative to the outer member 20 paddles said viscous fluid 46 in the toroidal cavity 44 with the radial paddles 36 such as shown in FIG.3-5. FIG.3-4 show supported load 50 applied to inner member 30 moving inner member center axis 34 down towards outer member center axis 26 such that inner member center bore axis 34 is substantially centered with outer member center bore axis 26. FIG. 5 shows relative up and down radial motion 52 of inner member 30 in the cavity 44 paddling the viscous fluid 46 with radial paddles 36 with an applied supported load 50.

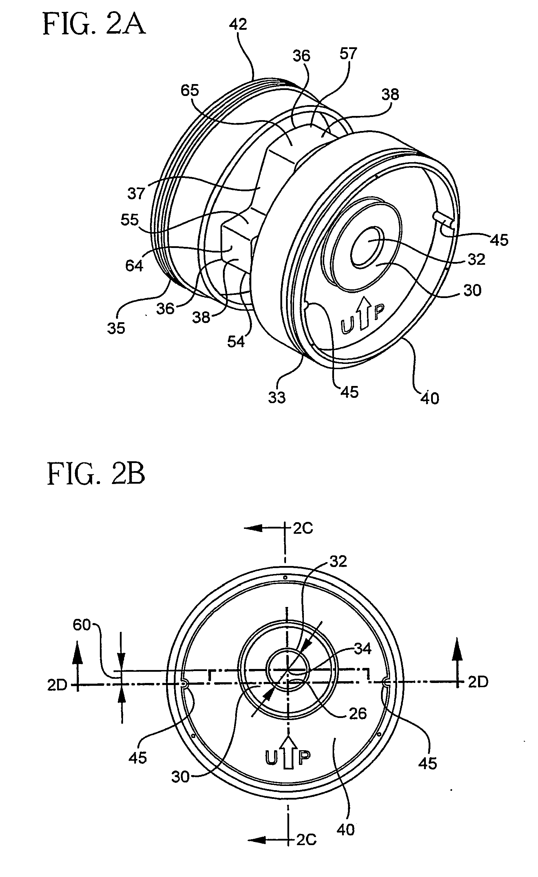

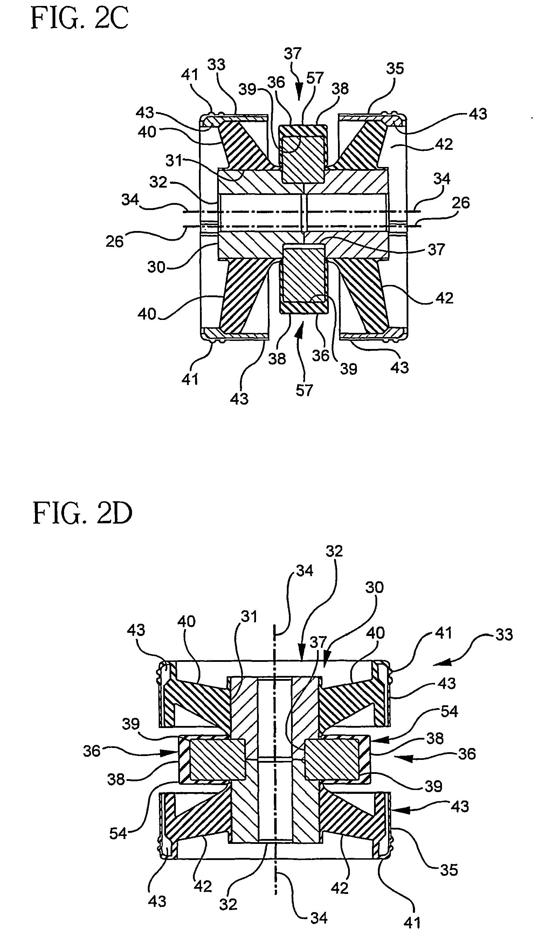

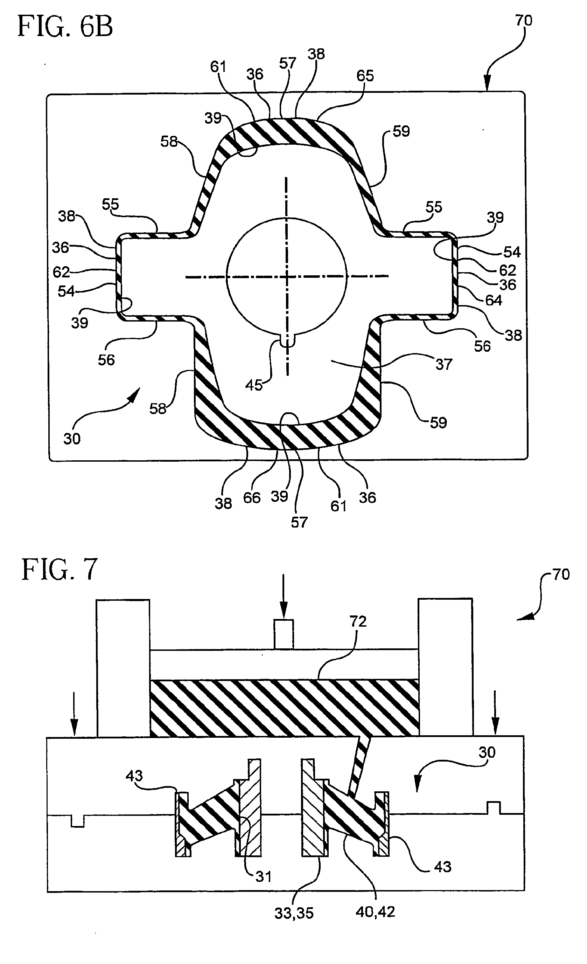

Vehicle cab suspension radial damped bushing 20 provides for damping motion about a vehicle cab suspension axis. Vehicle cab suspension radial damped bushing 20 has a nonelastomeric rigid outer tubular member 22 with an outer member center bore 24 for receiving and constraining the nonelastomeric rigid inner member 30 and the intermediate sidewall elastomers 40 and 42. FIG. 2 shows the nonelastomeric rigid inner member 30 and the intermediate sidewall elastomers 40 and 42 prior to being disposed into outer member center bore 24 and being constrained by outer member 22. The inner member 30 includes a plurality of radial paddles 36 that extend radially outward. When installed into the outer member center bore 24 and constrained by the outer member 22 the vehicle cab suspension bushing intermediate sidewall elastomers 40, 42 form a toroidal cavity 44 for constraining viscous fluid 46 around the radial paddles 36. The nonelastomeric rigid inner member center axis 34 is offset above the nonelastomeric rigid outer tubular member center axis 26 with offset 60. As shown in FIG. 2, the first and second intermediate sidewall elastomer members 40, 42 are mold bonded to outer surfaces of the rigid inner member 30 with the sidewall elastomer members 40, 42 extending obliquely outward and away from the sides of radial paddles 36. As shown in FIG. 1, with the first and second intermediate sidewall elastomer members 40, 42 disposed between the inner member 30 and the outer member 22, the sidewall elastomers 40,42 form a toroidal cavity 44 for constraining viscous fluid 46 around the radial paddles 36 with the previous uninstalled obliquely oriented inner walls of sidewall elastomers 40,42 coming into parallel alignment with and adjacent to the sides of paddles 36 with a narrow gap of viscous fluid 46 there between. Motion of inner member 30 relative to outer member 22, such as motion 52 shown in FIG. 5 paddles the viscous fluid 46 in the toroidal cavity 44 with the radial paddles 36. The movement of the radially extending paddles 36 by motion of inner member 30 forces the viscous fluid 46 to flow through the narrow gaps of the toroidal cavity 44 between outer member 22, the paddles, and sidewall elastomer inorder to dissipate energy and damping motion 52 about the vehicle suspension axis. Preferably the inner member radial paddles 36 have an elastomeric snubber layer 38. Preferably the inner member radial paddles elastomeric snubber layer 38 is a coating of elastomer on the rigid paddle base foundation 39 sized to provide elastomeric snubbing engagement with the outer member during extreme offcentering loads and motions of the vehicle cab suspension. The elastomeric snubber layer mold bonded elastomer 38 provides for snubbing between the inner member 30 and the outer member 22 and preferably has a relatively high thickness between the rigid paddle base foundation 39 and outer member 22 as compared with the elastomer coating low thickness between the sides of the rigid paddle base foundations 39 and the elastomer sidewalls 40 and 42. Preferably the inner member radial paddles elastomeric snubber layer 38 is a mold bonded elastomeric snubber layer with the elastomer bonded to the rigid paddle base foundation 39 during the molding of the elastomer 38 to the rigid metal member 39 with a rubber to metal bonding agent in an elastomer mold 70 that accepts the rigid base foundation member 39 such as shown in FIG. 6. As shown in FIG. 5 and 6B, the rigid inner member radial paddles 36 are preferably comprised of a left side radial paddle plunger 54 and a right side radial plunger 54. The radial paddle plungers 54 have an upper plunger surface 55 and a lower plunger surface 56 that are preferably oriented substantially normal to the center bore 32 and center axis 34 to provide beneficial plungering of fluid 46 during radial up/down motions 52 with a load 50 applied to the inner member 30. As shown in FIG. 5 and 6B, the rigid inner member radial paddles 36 are preferably comprised of an upper radial paddle snubber 57 and a lower radial paddle snubber 57. The radial paddle snubbers 57 have a left side surface 58 and a right side surface 59. The upper snubber 57 left and right side surfaces are preferably obliquely oriented to the center bore 32, center axis 34, and the upper plunger surfaces 55. The lower snubber 57 left and right side surfaces are preferably oriented normal to the center bore 32, center axis 34, and the lower plunger surfaces 56. The rigid base of the of the upper and lower snubbers 57 proximate the center bore 32 and center axis 34 is relatively wide and narrows toward the snubber ends 61 radially distal from the center axis 34, in comparison to the left and right plungers 54 which have a substantially constant width along their radial length. The left and right side rigid snubber surfaces underlying the left side surfaces 58 and the right side surfaces 59 are preferably obliquely oriented to the center bore 32, center axis 34, and the upper and lower plunger surfaces 55,56. The widths of the radial plunger ends 62 of the plungers preferably are substantially less compared to the widths of the snubber ends 61, with the lower snubber end width preferably greater than the upper snubber end width. The left and right side plungers 54 have a contact area 64 of their elastomeric snubber layer 38 where contact is made with the cavity wall 44 during left and right displacement of the inner member relative to the outer member 22. The upper snubber 57 has an elastomeric snubber layer contact area 65 where contact is made with the cavity wall 44 during an upward displacement of the inner member 30 relative to the outer member 22. The lower snubber 57 has an elastomeric snubber layer contact area 66 where contact is made with the cavity wall 44 during a downward displacement of the inner member 30 towards the outer member 22. Preferably the elastomeric snubber layer contact area 64 of the left and right side plungers 54 is less than the elastomeric snubber layer contact areas of the upper and lower snubbers 57. Preferably the lower snubber elastomeric snubber layer contact area 66 is greater than the upper snubber elastomeric snubber layer contact area 65. Preferably the thickness of the elastomeric snubber layer at the plunger contact areas 64 is less than the thickness of the elastomeric snubber layers at the snubber contact areas 65 and 66. Preferably the radial length of the lower snubber 57 is longer than the radial length of the upper snubber 57. Preferably the intermediate elastomer 40, 42 are mold bonded elastomers 40,42 with the elastomer 40,42 bonded to the rigid base foundation surface 31 of inner member 30 with a rubber to metal bonding agent in an elastomer mold 70 that accepts the inner member 30 with the rigid base foundation outer surface 31 such as shown in FIG. 7. Preferably the intermediate elastomer 40,42 is compressed between the nonelastomeric inner member 30 and the nonelastomeric outer member 22. The intermediate elastomer 40,42 is fixed and contained between the inner member 30 and the outer member 22 with the viscous fluid 46 constrained around the radial paddles 36 to preferably provide bushing 20 with a damping tan delta ≥.3 above 6.0 Hz at ±1.0mm input, and most preferably a damping tan delta ≥.35 for motion between the inner member 30 and the outer member 22.

The radial damped bushing 20 provides for damping motion about an axis. Radial damped bushing 20 preferably provides for damping about a vehicle suspended axis. Radial damped bushing 20 preferably provides for damping in a radial direction, preferably a predetermined radial direction oriented with a vehicle body motion. Radial damped bushing 20 most preferably providing damping of a radial up and down motion 52 about a vehicle cab suspension axis. In embodiments the radial damped bushing 20 provides for damping of a rotation motion. In embodiments the radial damped bushing 20 provides for damping in vertical, roll, and pitch modes. The radial damped bushing 20 is oreintable in suspension system layouts to provide damping motion in a vertical, horizontal, and about an axis direction. Bushing 20 is comprised of a nonelastomeric rigid outer tubular member 22 having an outer member center bore 24 with an outer member center axis 26, a nonelastomeric rigid inner member 30 having an inner member center bore 32 with an inner member center axis 34 with the inner member center axis 34 offset from the outer member center axis 26. The nonelastomeric rigid inner member 30 includes the radial paddles 36 extending radially outward from the center axis 34 towards the outer member 22. The bushing 20 includes the intermediate elastomer 40, 42 with the intermediate elastomer disposed between the inner member 30 and the outer member 22 and constraining the viscous fluid 46 around the radial paddles 36, wherein a supported load 50 applied to the inner member 30 substantially centers the inner member center axis 34 with the outer member center axis 26, with the intended supported load 50 displacing the inner member center axis 34 towards the outer member center axis 26 and a radial motion 52 of the inner member 30 relative to the outer member 22 paddles the viscous fluid 46 with the movement of viscous fluid dissipating energy and relative motion between the inner member and the outer member. The movement of the radial paddles 36 by the relative motion between outer member 22 and inner member 30 forces the viscous fluid 46 to flow through the narrow gaps of the toroidal cavity 44 between the paddles 36, the outer member 22, and sidewall elastomers 40,42 inorder to dissipate energy/damping motion. Preferably the inner member radial paddles 36 have an elastomeric snubber layer 38 that snubs extended movement of the inner member towards the outer member. Preferably the intermediate elastomer 40,42 is bonded to an outer surface 31 of the nonelastomeric rigid inner member 30 with obliquely extending sidewall orientations relative to the inner member, and the intermediate elastomer 40,42 is compressed between the nonelastomeric rigid inner member 30 and the nonelastomeric rigid outer tubular member 22 after bonding and during assembly into the outer member. The intermediate elastomer 40,42 is fixed and contained between the inner member 30 and the outer member 22 with the viscous fluid 46 constrained around the radial paddles 36 to preferably provide bushing 20 with a damping tan delta ≥.3 above 6.0 Hz at ±1.0mm input, and most preferably a damping tan delta ≥.35 for motion between the inner member 30 and the outer member 22. Preferably the damped bushing 20 provides damping at excitation amplitudes caused by suspension motion, while isolating lower amplitude vibrations coming from vibrating oscillating machinery such as an internal combustion engine.

The invention includes the method of making the vehicle suspension radial damped bushing 20 for damping vehicle suspension motion. Preferably the vehicle suspension damping bushing 20 is for a vehicle secondary suspension as compared to a primary suspension. Most preferably the vehicle secondary suspension bushing is a vehicle cab suspension damping bushing for damping radial motion about a vehicle cab suspension axis. The method includes providing a nonelastomeric rigid outer ductile tubular member 22 having an outer member center bore 24 with an outer member center axis 26, providing a nonelastomeric rigid inner member 30 having an inner member center bore 24 with an inner member center axis 26, the inner member including a plurality of radial paddles 36 extending radially outward, and providing a first intermediate sidewall elastomer 40 and a second intermediate sidewall elastomer 42. Preferably the provided elastomers 40, 42 have at least a 40 durometer, more preferably at least a 45 durometer, such as a natural rubber elastomer with a durometer in the range of about 45 to 55. The method includes providing a viscous fluid 46, preferably with the fluid 46 comprised of silicone, preferably with a viscosity >4,000 centistokes, preferably a viscosity between 4,000 and 60,000 centistokes. Preferably the viscous fluid 46 has at least a 5,000 centistokes viscosity, more preferably in the range from 5,000 to 50,000, more preferably in the range from 5,000 to 20,000. Preferably the viscous fluid 46 has at least about a 10,000 centistokes viscosity. In a preferred embodiment the viscosity of the viscous fluid 46 is about 10,000 (10,000±5,000). In a preferred embodiment the viscosity of the viscous fluid 46 is about 20,000 (20,000±7,000). Preferably the provided fluid 46 is a viscous silicone fluid with preferably at least 5,000 centistokes viscosity. The method includes disposing the first intermediate sidewall elastomer 40 and the second intermediate sidewall elastomer 42 between the inner member 30 and the outer member 22 to form a toroidal cavity 44 for constraining the viscous fluid 46 around the inner member radial paddles 36 with the inner member radial paddles 36 extending radially outward towards the outer member 22, wherein a supported load 50 applied to the inner member 30 substantially centers the inner member center axis 34 with the outer member center axis 26 and a radial motion 52 of the inner member 30 relative to the outer member 22 paddles the viscous fluid 46 in the toroidal cavity 44 with the radial paddles 36. The movement of the paddles 36 forces the viscous fluid 46 to flow through the narrow gaps of the toroidal cavity 44 between the paddles 36, outer member 22, and sidewall elastomers 40,42 inorder to dissipate energy and damping motion about the vehicle suspension axis. Preferably providing a nonelastomeric rigid inner member 30 with a plurality of radial paddles 36 extending radially outward includes providing a nonelastomeric rigid inner member 30 with a plurality of elastomeric snubber layer coated radial paddles 36, with elastomeric snubber layers 38 mold bonded to rigid paddle base foundations 39 such as shown in FIG. 5-6. Preferably providing inner member 30 with radial paddles 36 having elastomeric snubber layers 38 includes bond molding the elastomer 38 to the outer bonding surface of rigid paddle base foundation 39, most preferably molding the elastomer onto the rigid paddle base foundation with a chemical bonding adhesive inside a mold, and preferably vulcanization curing the elastomer in the rubber elastomer mold 70, such as shown in FIG. 6. Preferably molding the elastomeric snubber layers 38 includes providing an elastomer transfer stock 72, and transferring the elastomer transfer stock 72 under a pressure into the mold 70, such as through a sprue with the mold comprising close fitting steel metal pieces clamped in place and which receives the rigid paddle base foundation 39, and vulcanizing curing the elastomer 38 inside the mold 70 to preferably provide a center paddle wheel subassembly element 37. Preferably the method includes bonding the first intermediate sidewall elastomer 40 to a first side outer surface 31 of the nonelastomeric rigid inner member 30 and bonding the second intermediate sidewall elastomer 42 to a second side outer surface 31 of the nonelastomeric rigid inner member 30.

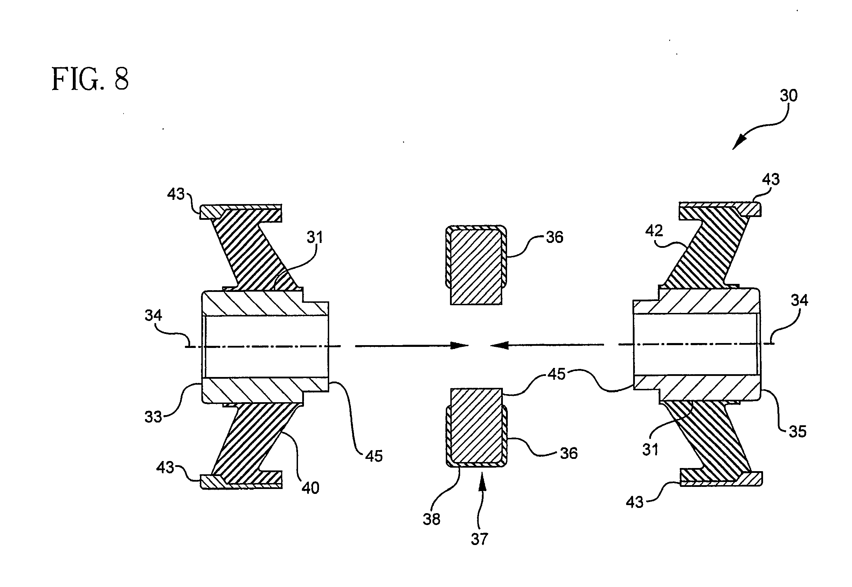

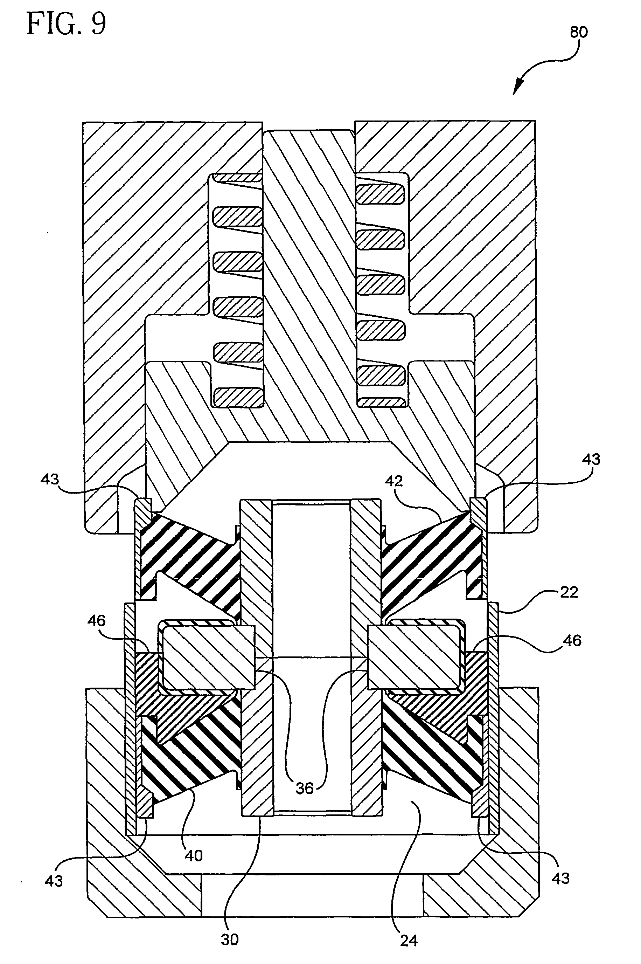

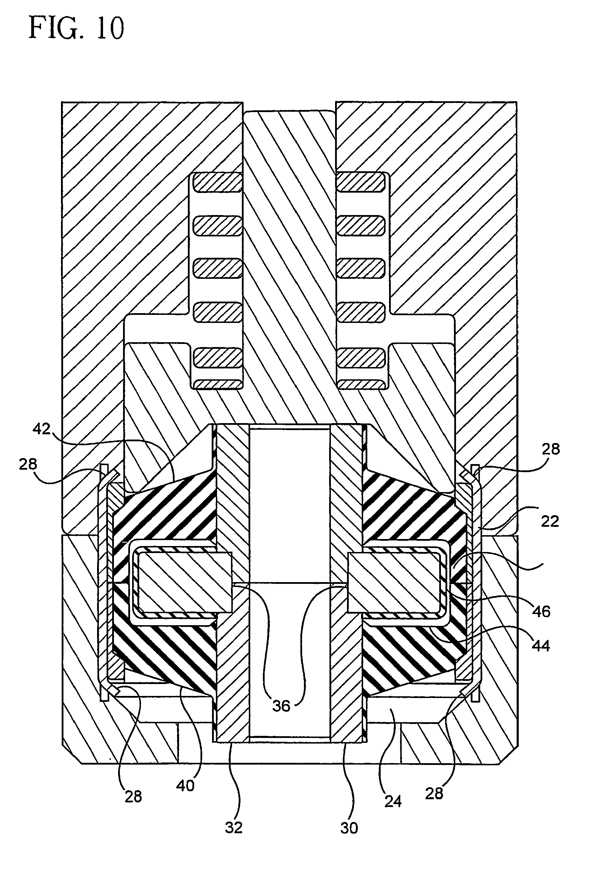

Preferably the method includes bonding the first intermediate sidewall elastomer 40 to a first side outer surface 31 of a first side inner member subassembly element 33. Preferably the method includes bonding the second intermediate sidewall elastomer 42 to a second side outer surface 31 of a second side inner member subassembly element 35. As shown in FIG.7, providing the inner member 30 with bonded sidewall elastomer 40 preferably includes bond molding the elastomer 40 to the outer bonding surface 31 of a first side inner member subassembly element 33, most preferably molding the elastomer onto the rigid base foundation outer surface 31 of first side inner member subassembly element 33 with a chemical bonding adhesive inside a mold 70, and preferably vulcanization curing the elastomer in the rubber elastomer mold 70. Preferably molding the intermediate sidewall elastomer 40 includes providing an elastomer transfer stock 72, and transferring the elastomer transfer stock 72 under a pressure into the mold 70, such as through a sprue with the mold comprising close fitting steel metal pieces clamped in place and which receives the rigid base foundation of first side inner member 33, and vulcanizing curing the elastomer 40 inside the mold 70 to preferably provide a first side inner member subassembly element 33 with sidewall elastomer 40. Similarly As shown in FIG.7, providing the inner member 30 with second bonded sidewall elastomer 42 preferably includes bond molding the elastomer 42 to the outer bonding surface 31 of a second side inner member subassembly element 35, most preferably molding the elastomer onto the rigid base foundation outer surface 31 of second side inner member subassembly element 35 with a chemical bonding adhesive inside a mold 70, and preferably vulcanization curing the elastomer in the rubber elastomer mold 70. Preferably molding the intermediate sidewall elastomer 42 includes providing an elastomer transfer stock 72, and transferring the elastomer transfer stock 72 under a pressure into the mold 70, such as through a sprue with the mold comprising close fitting steel metal pieces clamped in place and which receives the rigid base foundation of second side inner member 35, and vulcanizing curing the elastomer 42 inside the mold 70 to preferably provide a second side inner member subassembly element 35 with sidewall elastomer 42. As shown in FIG. 8, inner member 30 with attached intermediate elastomer sidewalls 40,42 is preferably provided by assembling and inserting the first side inner member subassembly element 33 and the second side inner member subassembly element 35 into the center paddle wheel subassembly element 37. Preferably by aligning and press fitting fixing the first side inner member subassembly element 33 and the second side inner member subassembly element 35 to center paddle wheel subassembly element 37. Preferably the resulting nonelastomeric rigid inner member 30 with the radial paddles 36 is provided as an inner assembly insert unit with attached elastomer side walls 40, 42 such as shown in FIG. 2, which can be inserted into the center bore 24 of outer member 22. The first and second intermediate sidewall elastomer members 40, 42 are molded to outer surfaces 31 of the rigid side inner member subassembly elements 33, 35 with the sidewall elastomer members 40, 42 extending obliquely outward and away from the center paddle subassembly 37 and the center axis 34. As shown in FIG. 9-10,the inner assembly insert unit of inner member 30 with attached obliquely oriented elastomer side walls 40, 42 is inserted into outer member 22 with the first and second intermediate sidewall elastomer members 40, 42 disposed between the inner member 30 and the outer member 22. The obliquely oriented sidewall elastomers 40,42 are compressed and oriented substantially normal to the inner member center axis 34 to form toroidal cavity 44 for constraining viscous fluid 46 around the radial paddles 36. Preferably the previous uninstalled obliquely oriented inner walls of sidewall elastomers 40,42 are disposed into parallel alignment with and adjacent to the sides of paddles 36 with a narrow gap of viscous fluid 46 there between. Preferably the method includes disposing the viscous fluid 46 inside the nonelastomeric rigid outer tubular member center bore 24. As shown in FIG. 9-10 the method preferably includes compressing the first intermediate sidewall elastomer 40 and the second intermediate sidewall elastomer 42 into the nonelastomeric rigid outer tubular member center bore 24 with the viscous fluid 46 sealed inside the nonelastomeric rigid outer tubular member center bore 24, most preferably with the fluid 46 filled and sealed inside the outer member center bore and the bushing without a filling port and plug in the bushing 20. In a preferred embodiment of the invention, such as shown in FIG. 9, one of the sidewall elastomers is used to plug an end of the nonelastomeric rigid outer tubular member center bore 24 and contain the disposed viscous fluid 46 in the outer member 22 during insert assembly. A predetermined fill volume of viscous fluid 46 is preferably disposed in the outer member center bore 24 such that the toroidal cavity 44 formed around the radial paddles is filled with the viscous fluid 46 when finally assembled with both elastomer sidewalls 40,42 contained between the inner member 30 and the outer member 22. As shown in FIG. 9-10, the method preferably includes inserting and containing both sidewall elastomers 40,42 inside outer member 22 while containing the viscous fluid 46 inside the outer member bore 24, preferably including crimping the ends of outer member 22 to contain the inserted intermediate elastomers 40, 42 between the outer member 22 and the inner member 30 and seal the viscous fluid in the bushing 20 inside the toroidal cavity 44 around the radial paddles 36. As shown in FIG. 9-10, the method preferably includes providing an insert crimp assembly tool 80 for receiving the outer member 22, inserting the inner member 30 and intermediate elastomers 40,42 into the outer member 22, and crimping outer member 22 to contain and fix the intermediate elastomers 40,42 between the inner member 30 and the outer member 22 and seal the viscous fluid 46 around the radial paddles 36. The intermediate elastomer 40,42 is fixed and contained between the inner member 30 and the outer member 22 with the viscous fluid 46 constrained around the radial paddles 36 to preferably provide bushing 20 with a damping tan delta ≥.3 above 6.0 Hz at ±1.0mm input, and most preferably a damping tan delta ≥.35 for motion between the inner member 30 and the outer member 22.

The invention includes a method of making the radial damped bushing 20, preferably for damping radial motion about an axis. The method includes providing a nonelastomeric rigid outer ductile tubular member 22 having an outer member center bore 24 with an outer member center axis 26, providing a nonelastomeric rigid inner plunger member 30 having an inner member center bore 32 with an inner member center axis 34, the inner member including a plurality of radial paddles 36 extending radially outward, providing a viscous fluid 46, disposing an intermediate elastomer 40, 42 between the inner member 30 and the outer member 22 with the intermediate elastomer 40,42 constraining the viscous fluid 46 around the inner member radial paddles 36, wherein a radial motion of the inner member 30 relative to the outer member 22 paddles the viscous fluid 46 with the radial paddles 36. The movement of paddles 36 forces the viscous fluid 46 to flow through the narrow gaps of the toroidal cavity 44 between the paddles, the outer member, and the sidewall elastomers inorder to dissipate energy and damping radial motion about the axis of motion. Preferably an intended supported load 50 applied to the inner member 30 substantially centers the inner member center axis 34 towards and with the outer member center axis 26. Providing nonelastomeric rigid inner member 30 with radial paddles 36 extending radially outward preferably includes providing the nonelastomeric rigid inner member 30 with the elastomeric snubber layer coated radial paddles 36. Disposing intermediate elastomer 40,42 between the inner member 30 and the outer member 22 preferably includes bonding a first intermediate sidewall elastomer 40 to a first side outer surface 31 of the nonelastomeric rigid inner member 30 and bonding a second intermediate sidewall elastomer 42 to a second side outer surface 31 of the nonelastomeric rigid inner member 30. Preferably a subassembly is formed by the rubber to metal bonded first side inner member subassembly element 33 and the rubber to metal bonded second side inner member subassembly element 35 press fit assembled with the center paddle wheel snubber subassembly element 37 to provide the nonelastomeric rigid inner member 30 with the intermediate elastomer attached for insertion into the outer member 22. Preferably the provided viscous fluid 46 is a viscous silicone fluid with preferably at least 5,000 centistokes viscosity. Disposing an intermediate elastomer between the inner member and the outer member preferably includes bonding the first intermediate sidewall elastomer 40 to a first side outer surface 31 of the nonelastomeric rigid inner member 30 and bonding the second intermediate sidewall elastomer 42 to a second side outer surface 31 of the nonelastomeric rigid inner member 30, and disposing the viscous fluid 46 inside the nonelastomeric rigid outer member center bore 24 and compressing the first intermediate sidewall elastomer 40 and the second intermediate sidewall elastomer 42 inside the nonelastomeric rigid outer member center bore 24 with the viscous fluid 46 sealed inside the nonelastomeric rigid outer member center bore 24. Preferably the viscous fluid 46 is filled and sealed in the bushing 20 without a filling port and plug. Preferably a subassembly is formed by the elastomer bonded first side inner member element 33 and the elastomer bonded second side inner member element 35 press fit assembled into the center paddle wheel snubber plunger element 37 to provide the nonelastomeric rigid inner member for insertion into the center bore 24. The intermediate elastomer 40,42 is fixed and contained between the inner member 30 and the outer member 22 with the viscous fluid 46 constrained around the radial paddles 36 to preferably provide bushing 20 with a damping tan delta ≥.3 above 6.0 Hz at ±1.0mm input, and most preferably a damping tan delta ≥.35 for motion between the inner member 30 and the outer member 22.

The invention provides a vehicle suspension rotation radial damped bushing 20, preferably for use as a front tractor cab isolation mount, with the front tractor cab isolation mount radially damped bushing 20 providing damping for the vehicles secondary cab suspension system. Preferably the bushing 20 provides for small angle rotations, preferably such as less than about 8 degrees of rotation, preferably for rotation in the range of about 4 to 5 degrees, such as at the front tractor cab suspension axis.

The vehicle suspension radial damped bushing 20 employs the viscous fluid 46 that provides internal damping inside the bushing 20. The viscous fluid 46 is moved by the motion of the rigid paddle wheel plunger snubber inner member 30 and flows through narrow gaps around the radial paddles 36 and inside the toroidal cavity of the cab mount damping bushing 20 causing loss of energy during motions to the cab structure and damping motion of the rigid inner member 30 relative to the rigid outer member 22.

The viscous mount radial damped bushing 20 is preferably comprised of several elastomeric and nonelastomeric rigid parts with the viscous fluid 46 trapped and contained within the bushing 20.

As shown in FIG. 1,3-4 the intermediate elastomer 40,42 is a flexible elastomeric element that supports the radial load 50 of the vehicle cab suspension load. There are preferably two intermediate elastomer elements, comprised of first intermediate sidewall elastomer 40 and second intermediate sidewall elastomer 42. Nonelastomeric rigid inner member 30 includes the plurality of radial paddles 36 that operate within the viscous fluid 46. Nonelastomeric rigid inner member's radial paddles 36 provide for snubbing of extreme vehicle cab suspension load forces with the paddle motion of the paddles 36 plungering the contained viscous fluid 46. Viscous fluid 46 is preferably contained by and fills the toroidal cavity 44 formed by the first and second intermediate elastomeric sidewalls 40,42 when disposed and fixed between the nonelastomeric rigid inner member 30 and nonelastomeric rigid outer tubular member 22. The viscous fluid 46 is constrained around and surrounds the radial paddles 36 of inner member 30, with a motion of the inner member 30 relative to the outer tubular member 22 paddling the viscous fluid 46 inorder to dissipate energy and damping this relative motion. Preferably the viscous fluid 46 is a silicone fluid. Preferably the viscous fluid 46 has a viscosity >4,000 centistokes, more preferably at least 5,000 centistokes viscosity. Preferably the silicone viscous fluid 46 is in range from 5,000 to 20,000 centistokes, with a preferred embodiment of about 10,000 (10,000±5,000) centistokes. Preferably the intermediate elastomer of sidewalls 40, 42 has at least a 40 durometer, preferably a durometer in the range of about 45 or 55 durometer, preferably with the elastomer comprised of rubber, most preferably natural rubber. Nonelastomeric rigid outer tubular ductile member 22 preferably is a steel tubular outer member 22 that is crimped at the ends 28 and holds the bushing assembly together, with the intermediate elastomer 40, 42 compressed within the outer member 22 between the outer member and the inner member 30, with the viscous fluid 46 elastomerically sealed within the bushing 20.

FIG. 2, 8 show the nonelastomeric rigid inner member 30 and intermediate elastomer subassembly of the sidewall elastomers 40, 42 assembled with the inner member center paddle wheel subassembly element 37. The first intermediate sidewall elastomer 40 is bonded to the first side outer surface 31 of the first side inner member subassembly nonelastomeric rigid element 33, preferably with the first side inner member subassembly nonelastomeric rigid element comprised of metal, preferably with the elastomer molded and bonded to the first side inner member subassembly nonelastomeric rigid element metal outer surface 31 such as shown in FIG. 7. The second intermediate sidewall elastomer 42 is bonded to the second side outer surface 31 of the second side inner member subassembly nonelastomeric rigid element 35, preferably with the second side inner member subassembly nonelastomeric rigid element comprised of metal, preferably with the elastomer molded and bonded to the second side inner member subassembly nonelastomeric rigid element metal such as shown in FIG. 7. Preferably the intermediate sidewall elastomers 40, 42 include a mold bonded nonelastomeric rigid shim element 43 at their perimeter for engaging the nonelastomeric rigid outer tubular member 22 during full assembly, preferably the rigid shims 43 are metal shims that are received in the mold 70 and mold bonded along with the inner member subassembly rigid element to the elastomer, preferably such as shown in FIG. 7. Preferably the intermediate sidewall elastomers 40, 42 include at least one outer periphery elastomer sealing bead 41 on the mold bonded nonelastomeric rigid shim element 43 that sealingly engages and is compressed by the rigid outer tubular member 22 for ensuring sealing on the fluid 46 within the outer tubular member 22. As shown in FIG. 1-4, 7 the elastomer coating extends around the shim 43 to provide for sealing engagement with the rigid outer tubular member 22 when assembled. Preferably the first intermediate sidewall elastomer 40 is bonded to first side outer surface 31 of first side inner member subassembly element 33 and the second intermediate sidewall elastomer 42 is bonded to second side outer surface 31 of second side inner member subassembly element 35, which are aligned and fixed by press fitting the first side inner member subassembly element 33 and the second side inner member subassembly element 35 into center paddle wheel subassembly element 37 to provide the nonelastomeric rigid inner member 30 with the radial paddles 36 and the intermediate sidewall elastomers 40, 42 attached on both sides. As shown in FIG.1-6, 8-10 the radial paddles 36 of center paddle wheel subassembly element 37 preferably include an elastomeric snubber layer 38. The elastomeric snubber layer 38 on the radial paddles is preferably mold bonded to their underlying rigid paddle base foundation 39 such as shown in FIG. 6, with this elastomeric snubber layer preferably sized to provide elastomeric snubbing engagement with the outer member 22 during extreme load forces. Preferably the alignment of these three pieces is insured with alignment feature elements 45 built into each piece so that the assembly fixtures can maintain proper alignment, preferably with the final bushing maintaining the toroidal cavity 44 around the paddles 36 with a uniform viscous fluid gap and a demarcated up alignment installation orientation. Preferably the alignment feature elements 45 include two rubber tabs at each ID of the two sidewalls 40, 42 that engage with an alignment feature on the center paddle wheel subassembly element 37. As shown preferably fluid sealing is achieved by the outer periphery elastomer coating sealing on the mold bonded nonelastomeric rigid shim perimeter elements 43 of the sidewalls 40, 42, preferably with molded elastomer beads 41.

The subassembly of the two flexible intermediate sidewall elastomers 40,42 and the nonelastomeric paddle wheel rigid inner plunger snubber member 30 is pressed and fitted into the open nonelastomeric rigid outer tubular member 22. Before the two outer intermediate sidewall elastomers 40, 42 are axially compressed together to form cavity 44 (axially uncompressed shown in FIG. 2, 9), a volume of viscous fluid 46, preferably a predetermined measured volume of viscous fluid 46, is added to the open space inside the center bore tube of nonelastomeric rigid outer tubular member 22. With the viscous fluid 46 added, the subassembly of the two flex intermediate sidewall elastomers 40,42 and the nonelastomeric paddle wheel rigid inner member 30 is then axially compressed into the open center bore of nonelastomeric rigid outer tubular member 22, and nonelastomeric rigid outer tubular member 22 is crimped providing a sealed unit containing the fluid 46 and the elastomer sidewalls 40,42. This method of fluid fill and sealing eliminates the need to have a side filling port and plug through the outer member 22 or in the bushing 20.

Section C-C in FIG. 1, 3 shows the completed assembly and the left and right side gaps show the fluid shearing area above and below. Section D-D in FIG. 1 shows the radial gap on each side and the ends around the paddles 36.

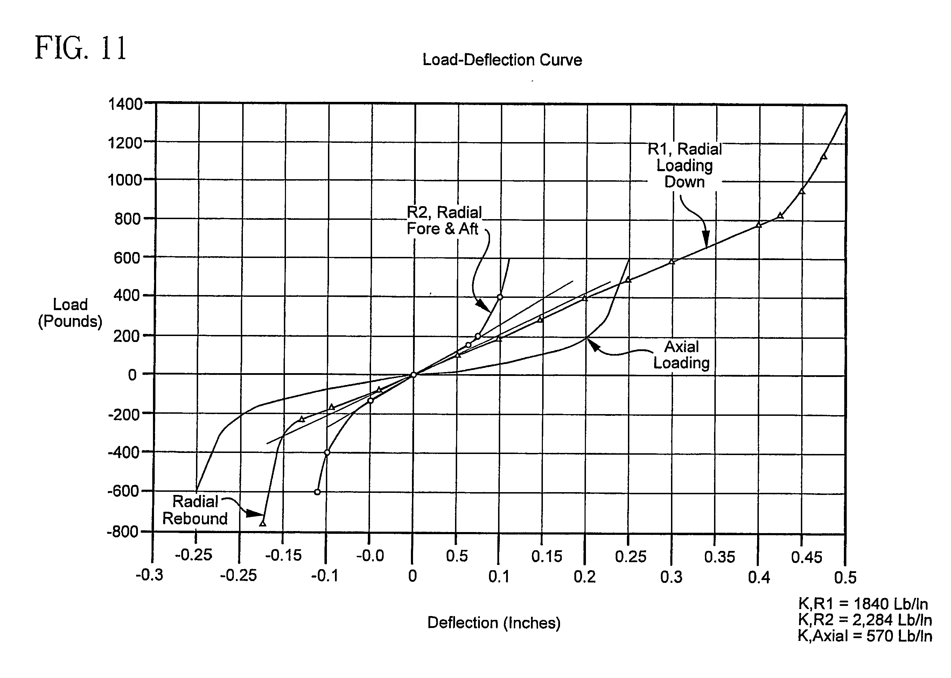

Preferably the radial damped bushing 20 has a damping tan delta >.25 above 6.0 Hz at ±1.0mm input, more preferably a damping tan delta ≥.3, and most preferably a damping tan delta ≥.35. A bushing 20 in accordance with the invention using a volume of about 67 CC (67±3CC) of viscous fluid 46 having a viscosity of about 20,000 centistokes, provided a damping tan delta >.25 with a static applied support load 50 of about 1,800 N (183.5kg) centering the offset center axis 34 with the center axis 26, with a radial stiffness Kr=340N/mm reference and a lateral stiffness Ka=100N/mm reference. FIG. 11 shows a load deflection curve for a bushing in accordance with the invention with load in pounds and deflection in inches.

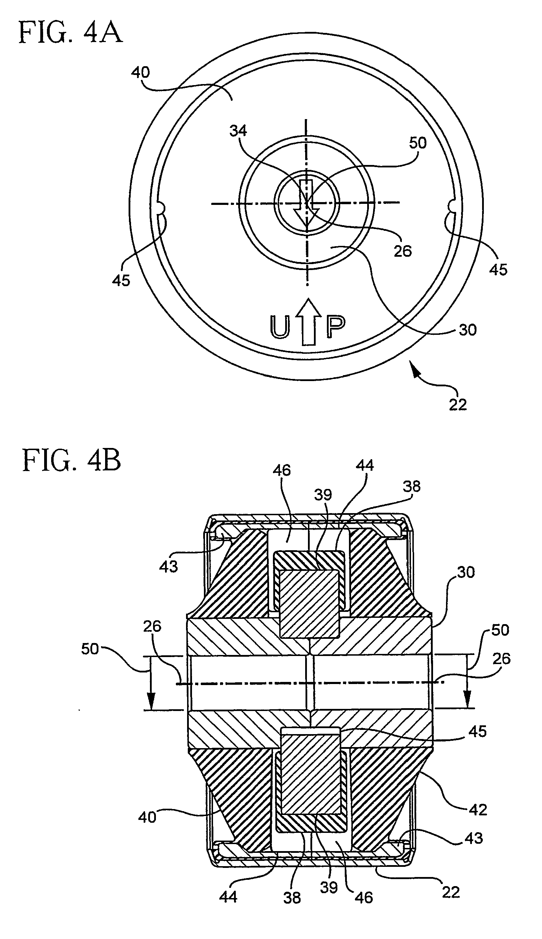

When the bushing 20 supports the vehide cab suspension supported load 50, the inner member 30 becomes substantival centered within the tubular outer member 22, such as shown In FIG. 4. During extreme shock load inputs, the nonelastomeric paddle wheel rigid inner member 30 and its radially extending paddles 36 move vertically up and down and will eventually snub out against the inside of the intermediate elastomer sidewalls at their mold bonded nonelastomeric rigid shim perimeter elements 43 adjacent the outer member 22. in a similar manner, the fore and aft inputs will also be snubbed out by the two rubber sections 38 making contact in that direction against the shim perimeter elements 43 and outer member 22. The gap total volume preferably remains nearly constant during all linear motions (vertical, fore and aft and lateral) because as one side gap gets larger, the other side gets smaller. The paddles 36 and the fluid 46 provide damping of relative motion between the inner member 30 and the outer member 22.

It will be apparent to those skilled in the art that various modifications and variations can be made to the present invention. The present invention cover the modifications and variations of this invention provided they come within the scope of the appended claims.

## Claims

1. A vehicle cab suspension radial damped bushing (20) for radial damping, said vehicle cab suspension bushing comprised of:
a nonelastomeric rigid outer tubular member (22) having an outer member center bore (24) with an outer member center axis (26), a nonelastomeric rigid inner member (30) having an inner member center bore (32) with an inner member center axis (34), said inner member center axis (34) offset from said outer member center axis (26), said inner member (30) including a plurality of radial paddles (36) extending radially outward towards said outer member (22), a first intermediate sidewall elastomer (40) and a second intermediate sidewall elastomer (42), said first intermediate sidewall elastomer (40) and said second intermediate sidewall elastomer (42) disposed between said inner member (30) and said outer member (24) and forming a toroidal cavity (44) for constraining a viscous fluid (46) around said radial paddles (36), wherein a supported load applied to said inner member (30) centers said inner member center axis (34) with said outer member center axis (36) and wherein a supported load (50) motion of said inner member (30) relative to said outer member (22) paddles said viscous fluid (46) in said toroidal cavity (44) with said radial paddles (36).

2. A vehicle suspension bushing as claimed in Claim 1, wherein said inner member radial paddles (36) have an elastomeric snubber layer (38).

3. A vehicle suspension bushing as claimed in Claim 1, wherein said intermediate elastomer (40) is bonded to an outer surface of said nonelastomeric inner member (20), and said intermediate elastomer (40) is compressed between said nonelastomeric inner member (30) and said nonelastomeric outer member (22).

4. A method of making a vehicle cab suspension radial damped bushing for damping bushing for damping vehicle cab suspension motion about a vehicle cab suspension axis, said method comprising:
providing a nonelastomeric rigid outer ductile tubular member (22) having an outer member center bore (24) with an outer member center axis (26), providing a nonelastomeric rigid inner member (30) having an inner member center bore (32) with an inner member center axis (34), said inner member (30) including a plurality of radial paddles (36) extending radially outward, providing a first intermediate sidewall elastomer (40) and a second intermediate sidewall elastomer (42), providing a viscous fluid (46), disposing said first intermediate sidewall elastomer (40) and said second intermediate sidewall elastomer (42) between said inner member (30) and said outer member (22) to form a cavity (44) for constraining said viscous fluid (46) around said inner member radial paddles (36) with said inner member radial paddles (36) extending radially outward towards said outer member (22), with said inner member center axis (34) offset from said outer member axis (26), wherein a supported load (50) applied to said inner member (30) substantially centers said inner member center axis (34) with said outer member center axis (36) and a supported load motion of said inner member (30) relative to said outer member (22) paddles said viscous fluid (46) in said cavity (44) with said radial paddles (36).

5. A method as claimed in Claim 4, wherein providing a nonelastomeric rigid inner member (30) with a plurality of radial paddles (36) extending radially outward includes providing a nonelastomeric rigid inner member (30) with a plurality of elastomeric snubber layer coated radial paddles (36).

6. A method as claimed in Claim 4, said method including bonding said first intermediate sidewall elastomer (40) to a first said outer surface of said nonelastomeric inner member (30) and bonding said second intermediate sidewall elastomer (42) to a second side outer surface of said nonelastomeric inner member (30).

7. A method as claimed in Claim 4, said method including bonding said first intermediate sidewall elastomer (40) to a first side outer surface of said nonelastomeric inner member (32) and bonding said second intermediate sidewall elastomer (42) to a second side outer surface of said nonelastomeric inner member (32), disposing said viscous fluid (46) inside said nonelastomeric rigid outer tubular member center bore (24) and compressing said first intermediate sidewall elastomer (40) and said second intermediate sidewall elastomer (42) inside said nonelastomeric rigid outer tubular member center bore (24) with said viscous fluid (46) sealed inside said nonelastomeric rigid outer tubular member center bore (24).

8. A method as claimed in Claim 4, said method including bonding said first intermediate sidewall elastomer (40) to a first side outer surface of a first side inner member (33) subassembly element and bonding said second intermediate sidewall elastomer (42) to a second side outer surface of a second side inner member subassembly element (35) and aligning and fixing said first side inner member subassembly element (33) and said second side inner member subassembly element (35) to a center paddle wheel (37) subassembly element to provide said nonelastomeric rigid inner member (30) with said radial paddles (36).

## Patentansprüche

1. Dämpfungsbuchse (20) zur radialen Dämpfung für eine Fahrzeugführerhausaufhängung, umfassend einen nicht elastomeren, steifen äußeren rohrförmigen Körper (22) mit einer äußeren Körpermittelbohrung (24) mit einer äußeren Körpermittelachse (26), einen nichtelastomeren, steifen inneren Körper (30) mit einer inneren Körpermittelbohrung (32) mit einer inneren Körpermittelachse (34), die von der äußeren Körpermittelachse (26) versetzt ist, wobei der innere Körper (30) mehrere radiale Flügel (36) aufweist, die sich radial nach außen gegen den äußeren Körper (22) erstrecken; eine erste elastomere mittlere Seitenwand (40) und eine zweite elastomere mittlere Seitenwand (42), wobei die erste elastomere mittlere Seitenwand (40) und zweite elastomere mittlere Seitenwand (42) zwischen dem inneren Körper (30) und dem äußeren Körper (24) angeordnet sind und einen ringförmigen Hohlraum (44) bilden, der rund um die radialen Flügel (36) eine viskose Flüssigkeit (46) einschließt, wobei ferner eine getragene Last, die auf den inneren Körper (30) einwirkt, die innere Körpermittelachse (34) bezüglich der äußeren Körpermittelachse (36) zentriert, und wobei eine getragene Last (50) bei Bewegung des inneren Körpers (30) in Bezug auf den äußeren Körper (22) die Bewegung der viskosen Flüssigkeit (46) in dem ringförmigen Hohlraum (44) mit den radialen Flügeln (36) bewirkt.

2. Fahrzeugaufhängungsbuchse nach Anspruch 1, **dadurch gekennzeichnet, daß** die radialen Flügel (36) des inneren Körpers eine elastomere Dämpfungsschicht (38) aufweisen.

3. Fahrzeugaufhängungsbuchse nach Anspruch 1, **dadurch gekennzeichnet, daß** die mittlere Seitenwand (40) mit einer äußeren Oberfläche des nicht elastomeren inneren Körpers (20) verbunden ist, und daß die mittlere elastomere Seitenwand (40) zwischen dem nicht elastomeren inneren Körper (30) und dem nicht elastomeren äußeren Körper (22) zusammengepreßt ist.

4. Verfahren zur Schaffung einer radialen Dämpfungsbuchse einer Fahrzeugführerhausaufhängung zur Dämpfung der Fahrzeugführerhaus-Aufhängungsbewegung um eine Fahrzeugführerhaus-Aufhängungsachse, umfassend: Schaffen eines nicht elastomeren, steifen, äußeren, dehnbaren, rohrförmigen Körpers (22), der eine äußere Mittelbohrung (24) aufweist sowie eine äußere Körpermittelachse (26), Schaffen eines nicht elastomeren, steifen inneren Körpers (30) mit einer inneren Körpermittelbohrung (32) und einer inneren Körpermittelachse (34), wobei der innere Körper (30) mehrere radiale Flügel (36) aufweist, die sich radial nach außen erstrecken, Schaffen eines ersten Seitenwandzwischenelastomers (40) und eines zweiten Seitenwandzwischenelastomers (42), Schaffen einer viskosen Flüssigkeit (46), Anordnen des ersten Seitenwandzwischenelastomers (40) und des zweiten Seitenwandzwischenelastomers (42) zwischen dem inneren Körper (30) und dem äußeren Körper (22) zur Bildung eines Hohlraums (44) zwecks Begrenzung der viskosen Flüssigkeit (46) rund um die radialen inneren Flügel (36) mit Hilfe der radialen inneren Flügel (36), die sich in radialer Richtung nach außen gegen den äußeren Körper (22) erstrecken, wobei die innere Körpermittelachse (34) von der äußeren Körpermittelachse (26) versetzt ist, so daß eine getragene Last (50), die auf den inneren Körper (30) einwirkt, die innere Körpermittelachse (34) im wesentlichen mit der äußeren Körpermittelachse (36) zentriert und eine getragene Lastbewegung des inneren Körpers (30) in Bezug auf den äußeren Körper (22) die viskose Flüssigkeit (46) in dem Hohlraum (44) mit den radialen Flügeln (36) bewegt.

5. Verfahren nach Anspruch 4, **dadurch gekennzeichnet, daß** die Schaffung eines nicht elastomeren, steifen, inneren Körpers (30) mit mehreren radialen Flügeln (36), die sich in radialer Richtung nach außen erstrecken, die Schaffung eines nicht elastomeren, steifen, inneren Körpers (30) beinhaltet, der mehrere mit einer elastomeren Dämpfungsschicht beschichtete radiale Flügel (36) aufweist.

6. Verfahren nach Anspruch 4, **dadurch gekennzeichnet, daß** das erste Seitenwandzwischenelastomer (40) mit einer ersten äußeren Oberfläche des nicht elastomeren, inneren Körpers (30) verklebt wird und das zweite Seitenwandzwischenelastomer (42) mit der äußeren Oberfläche einer zweiten Seitenwand des nicht elastomeren inneren Körpers (30) verklebt wird.

7. Verfahren nach Anspruch 4, **dadurch gekennzeichnet, daß** das erste Seitenwandzwischenelastomer (40) mit einer ersten Außenseitenoberfläche des nicht elastomeren, inneren Körpers (32) verklebt wird und das zweite Seitenwandzwischenelastomer (42) mit einer zweiten Außenseitenoberfläche des nicht elastomeren inneren Körpers (32) verklebt wird, daß die viskose Flüssigkeit (46) im inneren der nicht elastomeren, steifen Mittelbohrung (24) des äußeren rohrförmigen Körpers plaziert wird und daß das erste Seitenwandzwischenelastomer (40) und das zweite Seitenwandzwischenelastomer (42) im Inneren der nicht elastomeren, steifen Mittelbohrung (24) des äußeren rohrförmigen Körpers zusammengepreßt wird, wobei die viskose Flüssigkeit (46) im Inneren der Mittelbohrung (24) des nicht elastomeren, steifen, äußeren rohrförmigen Körpers abgedichtet ist.

8. Verfahren nach Anspruch 4, **dadurch gekennzeichnet, daß** das erste Seitenwandzwischenelastomer (40) mit einer äußeren Seitenoberfläche einer ersten Seite des inneren Körpers (33) eines Zusammenbau-Hilfselementes verklebt wird, daß das zweite Seitenwandzwischenelastomer (42) mit einer zweiten äußeren Oberflächenseite eines zweiten Innenkörper-Zusammenbau-Hilfselementes (35) verklebt wird und daß der erste Seiteninnenkörper des Zusammenbau-Hilfselementes (33) sowie der zweite Seiteninnenkörper des Zusammenbau-Hilfselementes (35) mit einem zentralen Flügelrad (37) -Zusammenbau-Hilfselement ausgerichtet und fixiert wird, um **dadurch** den nicht elastomeren steifen inneren Körper (30) mit den radialen Flügeln (36) zu bilden.

## Revendications

1. Coussinet à amortissement radial de suspension de cabine de véhicule (20) pour l'amortissement radial, ledit coussinet de suspension de cabine de véhicule étant constitué par :
un élément tubulaire externe rigide non élastomère (22) ayant un alésage central d'élément externe (24) avec un axe central d'élément externe (26), un élément interne rigide non élastomère (30) ayant un alésage central d'élément interne (32) avec un axe central d'élément interne (34),
ledit axe central d'élément interne (34) étant décalé par rapport audit axe central d'élément externe (26), ledit élément interne (30) comprenant une pluralité de palettes radiales (36) s'étendant radialement vers l'extérieur en direction dudit élément externe (22), un premier élastomère de paroi latérale intermédiaire (40) et un second élastomère de paroi latérale intermédiaire (42), ledit premier élastomère de paroi latérale intermédiaire (40) et ledit second élastomère de paroi latérale intermédiaire (42) étant disposés entre ledit élément interne (30) et ledit élément externe (24) et formant une cavité torique (44) pour contraindre un fluide visqueux (46) autour desdites palettes radiales (36), une charge soutenue appliquée sur ledit élément interne (30) centrant ledit axe central d'élément interne (34) avec ledit axe central d'élément externe (36) et un mouvement de charge soutenue (50) dudit élément interne (30) par rapport audit élément externe (22) malaxant ledit fluide visqueux (46) dans ladite cavité torique (44) avec lesdites palettes radiales (36).

2. Coussinet de suspension de véhicule selon la revendication 1, dans lequel lesdites palettes radiales d'élément interne (36) ont une couche élastomère d'amortissement (38).

3. Coussinet de suspension de véhicule selon la revendication 1, dans lequel ledit élastomère intermédiaire (40) est lié à une surface externe dudit élément interne non élastomère (20), et ledit élastomère intermédiaire (40) est comprimé entre ledit élément interne non élastomère (30) et ledit élément externe non élastomère (22).

4. Procédé de fabrication d'un coussinet à amortissement radial de suspension de cabine de véhicule pour amortir un mouvement de suspension de cabine de véhicule autour d'un axe de suspension de cabine de véhicule, ledit procédé comprenant :
la disposition d'un élément tubulaire (22) ductile, externe, rigide, non élastomère, ayant un alésage central d'élément externe (24) avec un axe central d'élément externe (26), la disposition d'un élément interne rigide non élastomère (30) ayant un alésage central d'élément interne (32) avec un axe central d'élément interne (34), ledit élément interne (30) comprenant une pluralité de palettes radiales (36) s'étendant radialement vers l'extérieur, la disposition d'un premier élastomère de paroi latérale intermédiaire (40) et d'un second élastomère de paroi latérale intermédiaire (42), la disposition d'un fluide visqueux (46), le positionnement dudit premier élastomère de paroi latérale intermédiaire (40) et dudit second élastomère de paroi latérale intermédiaire (42) entre ledit élément interne (30) et ledit élément externe (22) pour former une cavité (44) de façon à contraindre ledit fluide visqueux (46) autour desdites palettes radiales d'élément interne (36), lesdites palettes radiales d'éléments interne (36) s'étendant radialement vers l'extérieur en direction dudit élément externe (22), ledit axe central d'élément interne (34) étant décalé par rapport audit axe d'élément externe (26), une charge soutenue (50) appliquée sur ledit élément interne (30) centrant sensiblement ledit axe central d'élément interne (34) avec ledit axe central d'élément externe (36) et un mouvement de charge soutenue dudit élément interne (30) par rapport audit élément externe (22) malaxant ledit fluide visqueux (46) dans ladite cavité (44) avec lesdites palettes radiales (36).

5. Procédé selon la revendication 4, dans lequel la disposition d'un élément interne rigide non élastomère (30) avec une pluralité de palettes radiales (36) s'étendant radialement vers l'extérieur comprend la disposition d'un élément interne rigide non élastomère (30) avec une pluralité de palettes radiales (36) revêtues d'une couche élastomère d'amortissement.

6. Procédé selon la revendication 4, ledit procédé comprenant la liaison dudit premier élastomère de paroi latérale intermédiaire (40) à une première surface externe latérale dudit élément interne non élastomère (30) et la liaison dudit second élastomère de paroi latérale intermédiaire (42) à une seconde surface externe latérale dudit élément interne non élastomère (30).

7. Procédé selon la revendication 4, ledit procédé comprenant la liaison dudit premier élastomère de paroi latérale intermédiaire (40) à une première surface externe latérale dudit élément interne non élastomère (32) et la liaison dudit second élastomère de paroi latérale intermédiaire (42) sur une seconde surface externe latérale dudit élément interne non élastomère (32), la disposition dudit fluide visqueux (46) à l'intérieur dudit alésage central d'élément tubulaire externe rigide non élastomère (24) et la compression dudit premier élastomère de paroi latérale intermédiaire (40) et dudit second élastomère de paroi latérale intermédiaire (42) à l'intérieur dudit alésage central d'élément tubulaire externe rigide non élastomère (24) avec ledit fluide visqueux (46) enfermé de façon étanche à l'intérieur dudit alésage central d'élément tubulaire externe rigide non élastomère (24).

8. Procédé selon la revendication 4, ledit procédé comprenant la liaison dudit premier élastomère de paroi latérale intermédiaire (40) à une première surface externe latérale d'un premier élément de sous-ensemble d'élément interne latéral (33) et la liaison dudit second élastomère de paroi latérale intermédiaire (42) à une seconde surface externe latérale d'un second élément de sous-ensemble d'élément interne latéral (35) et l'alignement et la fixation dudit premier élément de sous-ensemble d'élément interne latéral (33) et dudit second élément de sous-ensemble d'élément interne latéral (35) à un élément de sous-ensemble de roue à palettes centrale (37) pour fournir audit élément interne rigide non élastomère (30) lesdites palettes radiales (36).
